# EUROPEAN PATENT APPLICATION

(11) **EP 2 405 402 A1**
(43) Date of publication of application: **11.01.2012**
(21) Application number: 10382187.2
(22) Date of filing: 06.07.2010
(51) Int. Cl.: G06T 19/00

(54) **Method and system for assembling components**

(71) Applicant: EADS Construcciones Aeronauticas, S.A., 28022 Madrid (ES)
(72) Inventor: Mas Morate, Fernando, 41011, Sevilla (ES); Serván Blanco, Javier, 41011, Sevilla (ES)
(74) Representative: Elzaburu Marquez, Alberto

(57) **Abstract**

System (1) for enhancing the assembly of components in an environment (10) using augmented reality techniques the system (1) comprising: an input module (7), which obtains both virtual data and real data taken in real-time of the component (100) that is to be assembled by an operator and of the environment (10); and an augmented reality module (8), in which the position and orientation of the data is determined for the positioning of the virtual data over the real data by means of a plurality of markers, the virtual data and the real data being combined in augmented reality in real-time. The invention also refers to a method for assembling components (100) in an environment (10) using augmented reality techniques.

## Description

### FIELD OF THE INVENTION

The present invention relates to a system and corresponding method for enhancing the assembly of components using augmented reality techniques, and more particularly, to the assembly of aircraft components in aircraft assembly lines.

### BACKGROUND

At present, most of the technical performances require the interaction with large quantities of information, therefore becoming necessary to combine the information and to present it in an appropriate manner. One technique for presenting combinations of information is augmented reality.

Augmented reality is a term for a live direct or indirect view of a physical real-world environment whose elements are *augmented* by virtual computer-generated imagery. It is related to mediated reality, in which a view of reality is modified by a computer. As a result, the technology of augmented reality functions by enhancing one's current perception of reality.

When using augmented reality techniques, the augmentation is conventionally done in real-time. Moreover, with the help of advanced augmented reality technology, for example by adding computer vision and object recognition, the information about the surrounding real world of the user becomes interactive and digitally usable. Artificial information about the environment and the objects in it can be stored and retrieved as an information layer on top of the real world view.

At present, augmented reality research explores the application of computer-generated imagery in live-video streams as a way to expand the real-world. Advanced research comprises the use of head-mounted displays and virtual retinal displays for visualization purposes, as well as the construction of controlled environments comprising sensors and actuators.

Thus, augmented reality is a technique allowing real elements coexist with virtual elements, such virtual elements providing additional information to the real elements. Augmented reality technology is linked to virtual reality, though these two techniques are different from each other in fundamental aspects: in virtual reality, for example, the user cannot see the real word surrounding him; in contrast with that, augmented reality complements the real vision of the user, but does not replace such real vision for another vision.

An augmented reality system is defined as such with the following properties:
- it combines both real and virtual objects;
- it is interactive and works in real-time; and
- virtual and real objects are aligned between each other.

The insertion of virtual elements in the real world presents the problem of coordinates referencing, in order to have both worlds perfectly integrated and moving in a joint way. This problem makes the election of the positioning system determining the position and orientation of the objects in the real world be of vital importance in augmented reality systems. Another problem to be solved is the election of an appropriate display system that allows watching virtual elements at the same time as real elements.

Augmented reality systems are used at present in educational proyects, such as museums, exhibitions, attraction parks, etc., showing information on places or objects together with virtual images giving information of these places or objects in the past. Moreover, augmented reality techniques are used, for example, in surgery, superimposing visual data on real elements, in order to minimize surgery impact.

Augmented reality techniques are also used in entertainment (video games), also in architecture for the virtual reconstruction of old buildings and for the presentation of new projects, in geological prospection to show an interactive analysis of the soil, in advertising, in navigation systems or in industrial applications in order to minimize the construction of real prototypes and to improve the quality of the final products.

In military operations, in order to enhance the operator's situational awareness, augmented reality systems can display real-time video overlaid with information displayed as computer-generated graphics geospatially referenced to the video. A method and a systems used for the automatically generation of augmented reality images is described in document US 2008/0147325 A1.

In the particular field of aircraft, it is known for example the use of augmented reality technology in landmark information systems, by which data relating to informing, instructing and entertaining passengers are visually presented. Also, the use of augmented reality is known in aircraft flight simulators, as described for example in US 5,717,414, providing a video image tracking system which provides a method of tracking an object's position and orientation within a virtual reality environment.

It is also known the use of augmented reality in heads-up displays for aircraft, providing a graphical depiction of flight-critical information optically superimposed on a real-world background, such that the pilot can see information gathered by the aircraft instrumentation, such as it is described in US 2004/0183696 A1.

One of the problems raised in manufacturing processes is the mounting of elements, and in particular the mounting of aircraft elements in aircraft assembly lines. The process used for assisting the assembly of elements is often based in the generation of guidelines. These guidelines describe the operational sequence to be done by the operators, and also the critical and fundamental parameters of the operation (dimension of elements in a joint, torque value in joints, characteristics of tightening or sealing systems, etc.). At present, the operators use the information contained in these guidelines in order to asure the correct performance of an operation. However, in certain cases, it is difficulat to handle such information, because the interpretation of plans is difficulat, or because the process is too complex.

Thus, it shall be desireable to guarantee that the information used is correct, and to allow checking the possible interferences between the elements disposed in a certain place, and the elements that will be disposed there in the future. The possibilities offered by augmented reality systems in such operations help the operator in the assembly of the different aircraft elements. However, the systems used at present are based on very complicated hardware, thus requiring high investment, and also present the problem that they are not coordinated with the existing engineering systems, in particular complex systems as in an aircraft.

As a consequence, it is necessary to provide support to the operator in the assembly of elements, such as aircraft elements, by a simple and practical hardware of reduced investment, with a high efectiveness. Also, it is necessary that the system is coordinated with the existing engineering systems, such that the use of the system is immediate and integrated in the product lifecycle, without its implementation involving a high effort.

It is not known by the applicant the existence of any augmented reality in the assembly of elements, and in particular in the assembly of aircraft elements.

The present invention comes to solve the afore-mentioned problems.

### SUMMARY OF THE INVENTION

One object of the present invention is a system for enhancing the assembly of components in an environment, and more particularly refers to the assembly of aircraft components, in particular of big aero structures, in an aircraft assembly line, using augmented reality techniques.

The system of the invention comprises:
- an input module, which obtains the input of both virtual data and real data of the components that are to be assembled, the virtual data comprising three-dimensional virtual model files of the environment where the assembly process is to be performed, and the real data comprising real images taken in real time by camera means;
- an augmented reality module in which the position and orientation of the data is determined for the positioning of the virtual data over the real data by means of a plurality of markers, the virtual data and the real data being combined in augmented reality in real-time;; and
- an output module comprising a visualization device in which augmented reality images are shown, the visualization device also providing the possibility of consultation of the characteristics of the elements being assembled.

The augmented reality module of the invention comprises a *reading module,* reading the virtual data from the input module, a *processing module,* extracting the information from the virtual data to be included in the augmented reality, a *positioning module,* detecting the position and orientation of markers, and positioning the virtual data over the real data of the environment where the assembly process is to be performed, an *integration module,* combining the virtual data coming from the processing module with the real data coming in real-time from the input module, which are combined in augmented reality in real-time by means of the information provided by the positioning module, and an *output interface,* feeding augmented reality data to the output module.

The main advantages of this system are that the modules used are simple and standard, therefore not involving high costs, and they are coordinated with the existing engineering systems, in particular with existing aircraft systems: the three-dimensional virtual model files in the input module come from the existing aircraft engineering systems. Moreover, the camera means in the input module can be any existing camera element in the aircraft.

Another object of the invention is a method for assembling components in an environment using a system of augmented reality as the one just described. More particularly, the method is directed to the assembly of aircraft components in aircraft assembly lines, as it will be further described.

Other features and advantages of the present invention will be understood from the following detailed description in relation with the enclosed drawings.

### BRIEF DESCRIPTION OF DRAWINGS

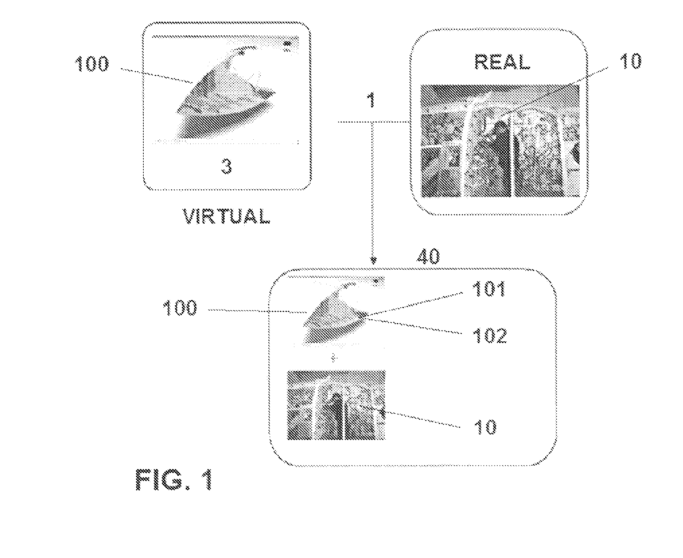

Figure 1 shows a schematic view of the elements comprised in the system, and of the operations involved in the method for enhancing the assembly of components using augmented reality techniques, according to the invention.
Figure 2 shows a second schematic view of the modules comprised in the system for enhancing the assembly of components using augmented reality techniques, and of the operations involved in the method according to the invention.

### DETAILED DESCRIPTION OF PREFERRED EMBODIMENTS

A preferred embodiment of the invention will be described in connection with a system 1 for enhancing the assembly of components 100 in an environment 10, particularly of aircraft components, and more in particular of big aero structures in the aircraft industry, using augmented reality techniques.

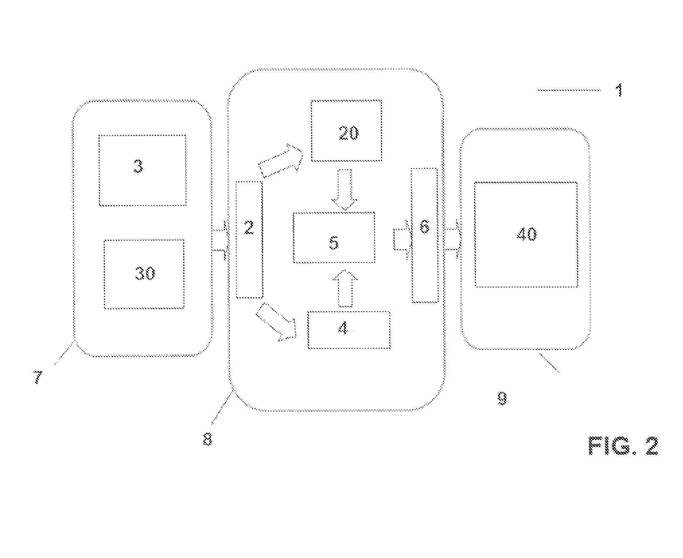

The system 1 of the invention comprises (see Figure 2):
- an input module 7, which obtains the input of both virtual data and real data of the components 100 that are to be assembled, the virtual data comprising three-dimensional virtual model files 3 of the environment 10 where the assembly process is to be performed, and the real data comprising real images taken in real time by camera means 30;
- an augmented reality module 8, in which the position and orientation of the data is determined for the positioning of the virtual data over the real data by means of a plurality of markers, the virtual data and the real data being combined in augmented reality in real-time; and
- an output module 9, comprising a visualization device 40 in which augmented reality images are shown, the visualization device 40 also providing the possibility of consultation of the characteristics of the components 100 being assembled.

The augmented reality module 8 of the invention comprises a *reading module* 2, reading the virtual data from the input module 7, a *processing module* 20, for extracting the information from the virtual data to be included in the augmented reality, a *positioning module* 4, detecting the position and orientation of markers, and positioning the virtual data over the real data of the environment 10 where the assembly process is to be performed, an *integration module* 5*,* combining the virtual data coming from the processing module 20 with the real data coming in real-time from the input module 7, which are combined in augmented reality in real-time by means of the information provided by the markers in the positioning module 4, and an *output interface* 6, feeding augmented reality data to the output module 9.

According to the invention, the three-dimensional virtual model files 3 in the input module 7 of the environment 10 where the assembly process is to be performed, are coming from existing aircraft engineering systems. The system 1 allows supporting the operator in the assembly operations to be performed in the aircraft environment 10.

In the system 1 of the invention, the existing engineering aircraft systems, which are configured for each aircraft in particular, provide the three-dimensional virtual model files 3 of the environment 10 where the assembly process is to be performed in the input module 7: these files 3 are converted into an interchangeable neutral graphic format, preferably a format 3DXML, that can be read in the reading module 2 and processed further in the integration module 5. The camera means 30 in the input module 7 are preferably a camera or a web camera situated in the working environment 10, taking real-time images from said environment 10, and also obtaining the information necessary for the calibration of the virtual and real data in the augmented reality module 8. Such calibration is effected by means of markers, which can either comprise markers specially created for calibration, or natural markers, comprising own elements in the aircraft area 10 that are easily recognized, such as holes, drills, junctions, etc. Both the natural markers and those specially created for calibration are comprised within the real data. The calibration in the system 1 of the invention is made by several markers: the real and virtual geometries of a component 100 used for calibration, and existing both in the real and virtual world, are recognized and matched together, the real geometry being recognized by means of the markers, and the virtual geometry being then matched over the real one. Thus, once the geometry of the component 100 used for calibration, has been established, by knowing the relative positioning of further virtual components with respect to the calibration component, the positioning of both virtual and real images of the further components can be correctly made.

Once the calibration has been effected, augmented reality is created and feeds data to the output module 9. The operator of the system 1 can visualize the real images of the aircraft obtained in real time onto which virtual images have been added, by means of the visualization device 40. The visualization device 40 is preferably a portable device. Also, the identification number of each component 100, usually called part number 102, can also be consulted by the operator.

The input module 7 in the system 1 uses three-dimensional files 3, preferably CAD files, as input of virtual data of component 100. These files 3 are preferably actualised and linked to the existing engineering systems in the aircraft.

The reading module 2 in the augmented reality module 8, reads both the virtual information from the three-dimensional files 3 and the real data information from the real images taken in real time by camera means 30, which also comprises the information necessary for the calibration of the system 1.

The processing module 20 in the augmented reality module 8, analyses the three-dimensional files 3, extracting from them the information that wants to be introduced in the augmented reality (geometry of the component 100, product structure of said component 100, etc.).

The positioning module 4 in the augmented reality module 8, detects the positioning and orientation of markers, which allow positioning the virtual data over the real area where the assembly process is to be performed.

The integration module 5 in the augmented reality module 8 comprises the following functionalities:
- calculation of the positioning and orientation of the element 100 by means of markers;
- control of movement, which allows detecting the movement of the operator, by means of the detection of several movement markers, further predicting the direction of the operator's movement, which allows determining with higher precision his new position, and better drafting and presenting the virtual data; virtual and real data are presented together, which allows a better predictive control of the operator's movement; also, the more redundant the number of movement markers is, the better is the precision in the predictive function obtained.

The output interface 6, feeding augmented reality data to the output module 9, comprises the following functionalities:
- calibration menu of system 1;
- operation menu of system 1, which allows visualizing augmented reality, hiding/showing, consultations of part numbers and assembling information.

In the output module 9, the combination of virtual models and real images is obtained, in real-time. Thus, the operator is able to visualize the components 100 that are to be assembled, perfectly placed in the aircraft. Also, the operator (or user) can consult information, such as the identification code 101 of the component 100, the part number 102 of said component 100, and its placing within the aircraft area 10 or any other information useful for the assembly operation or for an operator involved in the assembly process. Once the real component 100 is assembled, it is hidden in the system 1.

The system 1 can be implemented in any commercial standard device, though light devices such as tablet PC's are preferred.

It is another object of the present invention to provide a method for assembling components 100 in an environment 10 using a system 1 of augmented reality as the one just described. Preferably, the method is directed to the assembly of aircraft components 100 in aircraft assembly lines. The method comprises the following steps:
a) obtaining both virtual data and real data taken in real-time of the component 100 that is to be assembled by an operator and of the environment 10;
b) extracting the information from the virtual data to be included in the augmented reality;
c) detecting the position and orientation of markers, and positioning the virtual data over the real data of the environment 10 where the assembly process is to be performed;
d) combining the virtual data coming from the processing module 20 with the real data, in augmented reality in real-time in the positioning module 4; and
e) displaying the augmented reality combination to the operator in real-time.

In step c), the positioning and orientation of the element 100 to be assembled in the area 10 is effected by means of multiple markers, such that the system 1 operates with several markers in order to effect calibration, preferably recognizing the positioning and orientation of at least three markers in each working environment 10, effecting a comparison of the virtual model files 3, and making the best adjustment of the mentioned virtual model files 3 in the mentioned working environment 10.

In the method described, the component 100, once it has been assembled. Can be hidden in the virtual model files 3. In step b) of the method mentioned, the information also comprises an identification code 101 of the component 100 or part number 102, and its location in the environment 10.

Although the present invention has been fully described in connection with preferred embodiments, it is evident that modifications may be introduced within the scope thereof, not considering this as limited by these embodiments, but by the contents of the following claims.

## Claims

1. System (1) for enhancing the assembly of components in an environment (10) using augmented reality techniques **characterized in that** the system (1) comprises
an input module (7), which obtains both virtual data and real data taken in real-time of the component (100) that is to be assembled by an operator and of the environment (10),
and an augmented reality module (8), in which the position and orientation of the data is determined for the positioning of the virtual data over the real data by means of a plurality of markers, the virtual data and the real data being combined in augmented reality in real-time.

2. System (1) according to claim 1, wherein the virtual data are taken from a database and the real data are captured by camera means (30).

3. System (1) according to claim 2, wherein the augmented reality module (8) further detects the movement of the real data with respect to the camera means (30), calculates and predicts the direction of subsequent movement by means of the markers and from the detected movement, for enhanced positioning.

4. System (1) according to any of the preceding claims, wherein the virtual data comprise an identification code (101) of the component (100) or part number (102), and its location in the environment (10).

5. System (1) according to any of the preceding claims, wherein the system (1) further comprises an output module (9), comprising a visualization device (40) in which augmented reality images are shown.

6. System (1) according to any of the preceding claims, wherein the virtual data of the component (100) comprise three-dimensional virtual model files (3), which are converted into an interchangeable neutral graphic format.

7. System (1) according to any of the preceding claims, wherein the markers consist of
- Identifiable and recognizable elements of the environment (10) and/or of the component (100), acting as natural markers, or
- elements especially created to act as markers,
or combinations thereof.

8. System (1) according to any of the preceding claims, wherein the augmented reality module (8) comprises
- a reading module (2), for reading the data from the input module (7),
- a processing module (20), for extracting the information from the virtual data to be included in the augmented reality,
- a positioning module (4), for detecting the position and orientation of markers, and for positioning the virtual data over the real data of the environment (10) where the assembly process is to be performed,
- and an integration module (5), for combining the virtual data coming from the processing module (20) with the real data, which are combined in augmented reality in real-time in the positioning module (4).

9. System (1) according to any of the preceding claims, wherein the environment (10) is an aircraft or an aircraft subsystem.

10. Method for assembling components (100) in an environment (10) using augmented reality techniques, the method comprising :
a) obtaining both virtual data and real data taken in real-time of the component (100) that is to be assembled by an operator and of the environment (10);
b) extracting the information from the virtual data to be included in the augmented reality;
c) detecting the position and orientation of markers, and positioning the virtual data over the real data of the environment (10) where the assembly process is to be performed;
d) combining the virtual data coming from the processing module (20) with the real data, in augmented reality in real-time in the positioning module (4); and
e) displaying the augmented reality combination to the operator in real-time.

11. Method according to claim 11 further comprising hiding in the virtual model files (3) the component (100), once the component (100) has been assembled.

12. Method according to any of claims 10-11, wherein the information in b) comprises an identification code (101) of the component (100) or part number (102), and its location in the environment (10).

13. Method according to any of claims 10-12, wherein the environment (10) is an aircraft or an aircraft subsystem.
